# EUROPEAN PATENT APPLICATION

(11) **EP 4 439 739 A1**
(43) Date of publication of application: **02.10.2024**
(21) Application number: 22895344.4
(22) Date of filing: 24.10.2022
(51) Int. Cl.: H01M 4/90, B01J 23/42, B01J 35/10, H01M 4/96

(54) **CARBON CARRIER FOR FUEL CELL CATALYST AND FUEL CELL CATALYST**

(30) Priority: 22.11.2021 JP 2021189507
(71) Applicant: Toyo Tanso Co., Ltd., Osaka-shi, Osaka 555-0011 (JP); The Doshisha, Kyoto 602-8580 (JP)
(72) Inventor: INABA, Minoru, Kyotanabe-shi, Kyoto 610-0394 (JP); SHODAI, Yoshio, Osaka-shi, Osaka 555-0011 (JP)
(74) Representative: IP TRUST SERVICES
(86) International application number: PCT/JP2022/039489
(87) International publication number: WO 2023/090060

(57) **Abstract**

Realized are a carbon support for a fuel cell catalyst and a catalyst for a fuel cell which have excellent durability and excellent catalytic activity when a catalyst metal is supported. A carbon support according to an embodiment of the present invention has diffraction peaks of a (002) plane which are observed at least at 2Θ = 22.5° to 25°, 26°, and 26.5° in an X-ray diffraction spectrum with CuKα rays, has an intensity ratio I(P1)/I(P2) between a peak P1 at 2Θ = 26° and a peak P2 at 2Θ = 26.5° of not less than 1.4, and has a BET specific surface area of not less than 1000 m²/g.

## Description

### Technical Field

The present invention relates to a carbon support for a fuel cell catalyst and a catalyst for a fuel cell.

### Background Art

In recent years, fuel cells have been expected to serve as power sources for automobiles, etc., and practical use of the fuel cells has also been initiated. A fuel cell generally has a catalyst metal (e.g., platinum (Pt), and a platinum-containing alloy) and a support that supports the catalyst metal. As such a support, a carbon support having a large specific surface area has been frequently used.

According to techniques which have been proposed so far, durability of a carbon support and catalytic activity of a catalyst metal supported on the carbon support are improved by controlling crystallinity of the carbon support (see, for example, Patent Literatures 1 to 3).

### Citation List

### [Patent Literature]

[Patent Literature 1]
   Japanese Patent Application Publication Tokukai No. 2018-12626
[Patent Literature 2]
   International Publication No. WO 2017/154359
[Patent Literature 3]
   Japanese Patent Application Publication Tokukai No. 2018-81740

### Summary of Invention

### Technical Problem

However, those conventional techniques as described above still have room for improvement in terms of the durability and the catalytic activity.

An aspect of the present invention is to realize a carbon support for a fuel cell catalyst and a catalyst for a fuel cell which have excellent durability (in particular, oxidation resistance) and which also have excellent catalytic activity when a catalyst metal is supported.

### Solution to Problem

The inventors of the present application have found that a carbon support which has a specific crystallinity and which has a BET specific surface area of not less than a specific value makes it possible to realize a carbon support for a fuel cell catalyst and a catalyst for a fuel cell which have excellent durability (in particular, oxidation resistance) and which also have excellent catalytic activity when a catalyst metal is supported. The inventors thus have accomplished the invention of the present application. The present invention encompasses the following inventions.

A carbon support for a fuel cell catalyst, having: diffraction peaks of a (002) plane which are observed at least at 20 = 22.5° to 25°, 26°, and 26.5° in an X-ray diffraction spectrum with CuKα rays; an intensity ratio I(P1)/I(P2) between a peak P1 observed at 20 = 26° and a peak P2 observed at 20 = 26.5° of not less than 1.4; and a BET specific surface area of not less than 1000 m²/g.

A catalyst for a fuel cell, including a carbon support and a catalyst metal, the carbon support having diffraction peaks of a (002) plane which are observed at least at 20 = 22.5° to 25°, 26°, and 26.5° in an X-ray diffraction spectrum with CuKα rays; an intensity ratio I(P1)/I(P2) between a peak P1 observed at 20 = 26° and a peak P2 observed at 20 = 26.5° of not less than 1.4; and a BET specific surface area of not less than 1000 m²/g.

### Advantageous Effects of Invention

An aspect of the present invention makes it possible to provide a carbon support for a fuel cell catalyst and a catalyst for a fuel cell which have excellent durability (in particular, oxidation resistance) and which also have excellent catalytic activity when a catalyst metal is supported.

### Brief Description of Drawings

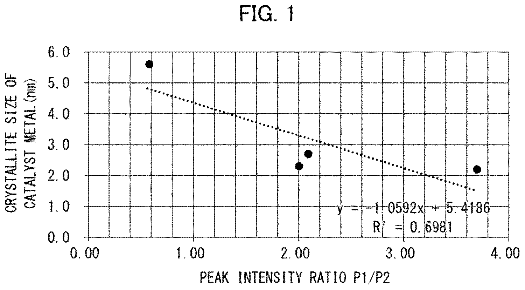

Fig. 1 is a graph in which crystallite size of a catalyst metal is plotted against peak intensity ratio in Examples.

### Description of Embodiments

The following description will discuss an embodiment of the present invention. However, the present invention is not limited to the embodiment. The present invention is not limited to arrangements described below, but may be altered in various ways by a skilled person within the scope of the claims. The present invention also encompasses, in its technical scope, any embodiment and example each derived by combining technical means disclosed in differing embodiments and examples. Further, all academic and patent documents etc. cited in the present specification are incorporated herein by reference. Any numerical range expressed as "A to B" in the present specification means "not less than A and not more than B (i.e., a range from A to B which includes both A and B)" unless otherwise stated.

### [1. Carbon support for fuel cell catalyst]

A carbon support for a fuel cell catalyst according to an embodiment of the present invention has: diffraction peaks of a (002) plane which are observed at least at 20 = 22.5° to 25°, 26°, and 26.5° in an X-ray diffraction spectrum with CuKα rays; an intensity ratio I(P1)/I(P2) between a peak P1 observed at 20 = 26° and a peak P2 observed at 20 = 26.5° of not less than 1.4; and a BET specific surface area of not less than 1000 m²/g.

In Patent Literature 1 described above, the crystallinity of the interior of pores where the catalyst metal is supported is selectively enhanced, while crystallization of the other parts are suppressed. This is intended to suppress a decrease in specific surface area so as to achieve both durability and catalytic activity. However, in the technique of this Patent Literature 1, in order to cause crystallization selectively at the interior of the pores, it is necessary to cause the interior of the pore to support metal particles which have a graphitization promoting effect at the time of heat treatment, and then to remove the metal particles after the heat treatment. More specifically, after adsorbing, reducing, and precipitating a metal complex etc. on a carbon material, the steps of firing and removing a metal component are required. This means that an additional step is required. In addition, increasing the crystallinity of the interior of the pores is intended. Accordingly, although the durability is good, aggregation is likely to occur when the catalyst metal is supported. As a result, efficient utilization of the catalyst metal may be hindered. In this regard, there has been room for improvement.

Patent Literature 2 described above causes a ratio of an area of the peak at 20 = 26°, which has a slightly improved crystallinity, with respect to an area of the peak 20 = 22.5° to 25°, which has a low crystallinity, to be smaller in XRD. This leads to a reduced crystallinity. As a result, the catalyst is supported in a highly dispersed manner, so that the catalytic activity is improved. However, there has been room for further improvement.

Patent Literature 3 described above, like the above Patent Literature 2, indicates that the ratio of the area of the peak at 20 = 26°, which has a slightly improved crystallinity, with respect to the area of the peak 20 = 22.5° to 25°, which has a low crystallinity, is not less than 0.06. Since such a range is broad, Patent Literature 3 fails to sufficiently indicate crystal conditions with which satisfactory catalytic activity can be obtained. Accordingly, there has been room for improvement.

In contrast, as described above, the carbon support according to an embodiment of the present invention has diffraction peaks of a (002) plane which are observed at least at 20 = 22.5° to 25°, 26°, and 26.5° in an X-ray diffraction spectrum with CuKα rays.

The diffraction peaks of the (002) plane which are observed at 20 = 26° and 26.5° indicate that the crystallinity of some of constituent carbon of the carbon support has been developed. Meanwhile, the diffraction peak of the (002) plane which is observed at 20 = 22.5° to 25° indicates that the crystallinity of some of the constituent carbon of the carbon support has not been excessively developed. A carbon support which has a moderately developed crystallinity of carbon can provide the durability (in particular, oxidation resistance) necessary for a fuel cell catalyst. The carbon support according to an embodiment of the present invention has an improved oxidation resistance, as compared with, for example, existing carbon supports (Ketjen Black EC300J and Vulcan (registered trademark) XC-72).

The "diffraction peak observed at 20 = 26°" may be a diffraction peak that is observed at approximately 20 = 26°. The "diffraction peak observed at 20 = 26°" may be, for example, a diffraction peak observed within a range of 20 = 25.5° to 26.3°, 25.6° to 26.3°, 25.7° to 26.3°, 25.8° to 26.3°, or 25.9° to 26.3°. Further, the upper limit value "26.3°" of each of the above ranges may be, for example, 26.2°, 26.1°, or 26.0°.

The "diffraction peak observed at 20 = 26.5°" may be a diffraction peak that is observed at approximately 20 = 26.5°. The "diffraction peak observed at 20 = 26.5°" may be, for example, a diffraction peak observed within a range of 20 = 26.1° to 26.9°, 26.1° to 26.8°, 26.1° to 26.7°, 26.1° to 26.6°, or 26.1° to 26.5°. Further, the lower limit value "26.1°" of each of the above ranges may be, for example, 26.2°, 26.3°, or 26.4°.

The carbon support in accordance with an embodiment of the present invention has an intensity ratio I(P1)/I(P2) between a peak P1 observed at 20 = 26° and a peak P2 observed at 20 = 26.5° of not less than 1.4. The intensity ratio I(P1)/I(P2) is preferably not less than 1.5, more preferably not less than 1.7, more preferably not less than 2.0, more preferably not less than 2.2, and more preferably not less than 2.5. The upper limit of the intensity ratio I(P1)/I(P2) is not limited. The upper limit may be, for example, 10, 9.0, 8.0, 7.0, 6.0, 5.0, 4.0, 3.7 or 3.2.

In a case where the intensity ratio I(P1)/I(P2) is the above-described value, it is possible to prevent the size (crystallite size) of the catalyst metal from becoming larger even in a case where a supporting method with use of an aqueous solvent is adopted in the step of supporting the catalyst metal on the carbon support. This makes it possible to reduce the size of the catalyst metal (crystallite size: e.g., 2 nm to 4 nm). Then, in a case where the catalyst has the carbon support that supports the catalyst metal having a small size, the specific surface area of the catalyst metal becomes large. This makes it possible to improve catalytic performance.

In a case where a plurality of peaks are observed in a range that can be considered as approximately 20 = 26° and also as approximately 20 = 26.5° (e.g., a range of 2θ = 26.1° to 26.3°) in the X-ray diffraction spectrum with CuKα rays for the carbon support, the peak at which 20 is smaller is considered as a diffraction peak observed at approximately 20 = 26.0° and the peak at which 20 is larger is considered as a diffraction peak observed at approximately 20 = 26.5°.

The carbon support according to an embodiment of the present invention has a BET specific surface area (specific surface area evaluated by the BET method) of not less than 1000 m²/g, preferably not less than 1100 m²/g, more preferably not less than 1200 m²/g, more preferably not less than 1250 m²/g, and more preferably not less than 1300 m²/g. The upper limit of the BET specific surface area is not limited. The upper limit may be, for example, 2000 m²/g, 1800 m²/g, 1600 m²/g, 1500 m²/g, or 1400 m²/g. From the viewpoint of increasing the durability (in particular, oxidation resistance) of the carbon support, it is preferable that the upper limit of the BET specific surface area be not more than 1500 m²/g.

According to the above configuration, it is possible to efficiently produce the carbon support which is for a fuel cell catalyst and which has excellent durability (in particular, oxidation resistance) and excellent catalytic activity at the time when the catalyst metal is supported. Note that a reason for the excellent catalytic activity described above is, for example, the following: because the carbon support has a high specific surface area, there are sufficient parts for supporting the catalyst metal on the carbon support, and accordingly, when a practical-level amount of the catalyst metal (e.g., 50 wt% of the fuel cell catalyst) is supported, it is possible to suppress an excessive increase in size of the catalyst metal.

The carbon support according to an embodiment of the present invention preferably has mesopores and/or micropores. Note that, in the present specification, pores having an average pore diameter of less than 2.0 nm are called micropores, pores having an average pore diameter of 2.0 nm to 50 nm are called mesopores, and pores having an average pore diameter of more than 50 nm are called macropores. Those pores are collectively referred to as pores.

The carbon support according to an embodiment of the present invention preferably has a random pore structure in which the mesopores are irregularly arranged. Note that the "random pore structure" is intended to mean a structure in which the mesopores are not regularly arranged and that the "random pore structure" differs from a structure in which the mesopores are regularly arranged. The random pore structure may be formed throughout the carbon support or may be formed in a portion of the carbon support.

It is preferable that the carbon support according to an embodiment of the present invention have a three-dimensional mesh structure constituted by a carbonaceous wall which forms outer shells of the mesopores. In this case, it is preferable that the carbon support have the random pore structure in which the mesopores are irregularly arranged. The carbon support having the random pore structure as well as the three-dimensional mesh structure of the carbonaceous wall of the carbon support makes it possible to realize a carbon support that has a higher strength.

It is desirable that the mesopores are open pores and that at least some of the mesopores form communicating pores that communicate with each other. Since the mesopores are open pores and form communicating pores, water that is generated as a catalytic reaction proceeds is discharged to the outside of the mesopores and the water does not remain inside the mesopores. This advantageously allows the catalytic reaction to proceed smoothly. Also, because oxygen can pass through the communicating pores, both the catalyst metal that is supported outside the mesopores and the catalyst metal that is supported inside the mesopores can sufficiently contribute to the catalytic reaction. This advantageously makes it possible to achieve a high utilization rate of the catalyst. There is also an advantage that it is possible to reduce the amount of the catalyst metal necessary for achieving a desired catalytic activity.

The micropores can stably support the catalyst metal. In a case where the carbon support according to an embodiment of the present invention has mesopores and micropores, the micropores may be formed at positions that face the mesopores. In this case, for example, a fuel gas is supplied via the communicating pores of the mesopores. As a result, the catalyst metal supported can sufficiently contribute to the catalytic reaction. This advantageously makes it possible to achieve a high utilization rate of the catalyst. There is also an advantage that it is possible to reduce the amount of the catalyst metal necessary for achieving a desired catalytic activity.

The carbon support according to an embodiment of the present invention has mesopores. The mesopores have an average pore diameter of preferably 3.5 nm to 5.0 nm. The average pore diameter of the mesopores is more preferably 3.6 nm to 5.0 nm, more preferably 3.7 nm to 5.0 nm, more preferably 3.8 nm to 5.0 nm, more preferably 3.9 nm to 5.0 nm, and more preferably 4.0 nm to 5.0 nm. Further, the upper limit value "5.0 nm" of each of the above-described ranges of the average pore diameter of the mesopores may be, for example, 4.8 nm, 4.6 nm, 4.4 nm, 4.2 nm, or 4.0 nm.

According to the above configuration, it is possible to efficiently produce the carbon support which is for a fuel cell catalyst and which has excellent durability (in particular, oxidation resistance) and excellent catalytic activity at the time when the catalyst metal is supported.

The carbon support according to an embodiment of the present invention has mesopores. It is preferable that the volume of the mesopores be not less than 0.73 mL per gram of the carbon support. The volume of the mesopores is more preferably not less than 0.80 mL per gram of the carbon support, more preferably not less than 0.90 mL per gram of the carbon support, more preferably not less than 0.95 mL per gram of the carbon support, and more preferably not less than 1.0 mL per gram of the carbon support. The upper limit of the volume of the mesopores is not limited. The upper limit may be, for example, 2.0 mL per gram of the carbon support, 1.8 mL per gram of the carbon support, 1.6 mL per gram of the carbon support, 1.4 mL per gram of the carbon support, 1.2 mL per gram of the carbon support, or 1.1 mL per gram of the carbon support.

According to the above configuration, it is possible to efficiently produce the carbon support which is for a fuel cell catalyst and which has excellent durability (in particular, oxidation resistance) and excellent catalytic activity at the time when the catalyst metal is supported.

The carbon support according to an embodiment of the present invention has micropores It is preferable that the micropores have an average pore diameter of 0.5 nm to 1.0 nm. The micropores have an average pore diameter of more preferably 0.6 nm to 0.7 nm.

According to the above configuration, it is possible to efficiently produce the carbon support which is for a fuel cell catalyst and which has excellent durability (in particular, oxidation resistance) and excellent catalytic activity at the time when the catalyst metal is supported.

The carbon support according to an embodiment of the present invention has micropores. It is preferable that the volume of the micropores be not less than 0.37 mL per gram of the carbon support. The volume of the micropores is more preferably not less than 0.38 mL per gram of the carbon support, more preferably not less than 0.39 mL per gram of the carbon support, more preferably not less than 0.40 mL per gram of the carbon support, more preferably not less than 0.41 mL per gram of the carbon support, more preferably not less than 0.42 mL per gram of the carbon support, and more preferably not less than 0.43 mL per gram of the carbon support. The upper limit of the volume of the micropores is not limited. The upper limit may be, for example, 1.00 mL per gram of the carbon support, 0.90 mL per gram of the carbon support, 0.80 mL per gram of the carbon support, 0.70 mL per gram of the carbon support, 0.60 mL per gram of the carbon support, 0.54 mL per gram of the carbon support, or 0.50 mL per gram of the carbon support.

According to the above configuration, it is possible to efficiently produce the carbon support which is for a fuel cell catalyst and which has excellent durability (in particular, oxidation resistance) and excellent catalytic activity at the time when the catalyst metal is supported.

The carbon support according to an embodiment of the present invention has a form that is not limited and that may be, for example, a powder form. When the carbon support is in powder form, the particle size (D50) of the carbon support is not limited but may be, for example, 200 nm to 10 pm, 1 pm to 8 pm, 1 pm to 6 pm, 1 pm to 4 pm, or 2 pm to 4 pm. Such a configuration makes it possible to more easily produce the carbon support for a fuel cell catalyst and the catalyst for a fuel cell which have excellent durability (in particular, oxidation resistance) and excellent catalytic activity at the time when the catalyst metal is supported.

The carbon support according to an embodiment of the present invention has a carbon content that is not limited but that is preferably not less than 90 wt%, more preferably not less than 92 wt%, more preferably not less than 94 wt%, not less than 96 wt%, more preferably not less than 98 wt%, and more preferably not less than 100 wt%.

It is preferable that the carbon support according to an embodiment of the present invention be substantially consisting of only carbon. For example, the carbon support preferably contains no resin. In this case, an oxide (e.g., MgO) and/or a sulfate (e.g., MgSO₄) may be present in a small amount(s). However, it is preferable that one or neither of the oxide (e.g., MgO) and the sulfate (e.g., MgSO₄) is present.

The oxidation onset temperature (the extrapolated onset temperature for an oxidation reaction on the basis of thermogravimetry (TG)) of the carbon support is not limited, but it is preferable, in terms of durability (in particular, oxidation resistance), that the oxidation onset temperature be high. The oxidation onset temperature is preferably not lower than 610°C, more preferably not lower than 612°C, more preferably not lower than 615°C, more preferably not lower than 617°C, more preferably not lower than 620°C (or higher than 620°C), more preferably not lower than 622°C, and more preferably not lower than 625°C. The upper limit of the oxidation onset temperature of the carbon support is not limited, but may be, for example, 670°C, 660°C, 650°C, 640°C, or 630°C.

### [2. Catalyst for fuel cell]

The catalyst for a fuel cell according to an embodiment of the present invention includes a carbon support and a catalyst metal, the carbon support having diffraction peaks of a (002) plane which are observed at least at 20 = 22.5° to 25°, 26°, and 26.5° in an X-ray diffraction spectrum with CuKα rays; an intensity ratio I(P1)/I(P2) between a peak P1 observed at 2θ = 26° and a peak P2 observed at 2θ = 26.5° of not less than 1.4; and a BET specific surface area of not less than 1000 m²/g.

Since the carbon support was previously explained in the above section of [1. Carbon support for fuel cell catalyst], a detailed description thereof will be omitted here.

The catalyst metal is not be limited, but can be, for example, platinum, ruthenium, iridium, rhodium, palladium, osmium, tungsten, lead, iron, copper, silver, chromium, cobalt, nickel, manganese, vanadium, molybtenum, gallium, or aluminum. From the viewpoint of improving the catalytic activity and improving the durability (e.g., resistance to carbon monoxide-poisoning or to the like poisoning), platinum is preferable as the catalyst metal.

The shape of the catalyst metal is not limited. The shape of the catalyst metal can be, for example, a particle shape, a scale shape, or a layer shape. From the viewpoint of efficiently producing the catalyst for a fuel cell according to an embodiment of the present invention, the catalyst metal preferably has a particle shape.

The size (crystallite size) of the catalyst metal is not limited, but is preferably less than 4 nm, more preferably not more than 3.5 nm, more preferably not more 3.3 nm, and more preferably not more 3.0 nm. In a case where the catalyst metal has such a small crystallite size, the specific surface area of the catalyst metal becomes larger. This makes it possible to improve the catalytic performance. The lower limit of the size of the catalyst metal is not be limited. The lower limit may be, for example, 1.0 nm or 2.0 nm.

In the catalyst for a fuel cell according to an embodiment of the present invention, the weight ratio between the carbon support and the catalyst metal is not limited. From the viewpoint of efficiently producing the catalyst for a fuel cell according to an embodiment of the present invention, the catalyst for a fuel cell contains preferably not less than 40 wt%, more preferably not less than 50 wt%, more preferably not less than 60 wt%, and more preferably not less than 70 wt% of the catalyst metal. The upper limit of the content of the catalyst metal in the catalyst for a fuel cell is not limited. The upper limit may be, for example, 80 wt%, 70 wt%, 60 wt%, or 50 wt% with respect to the catalyst for a fuel cell. In the case of the catalyst for a fuel cell according to an embodiment of the present invention, the size of the catalyst metal can be reduced even when the content of the catalyst metal is more than 50 wt%.

More specifically, in the catalyst for a fuel cell according to an embodiment of the present invention, the catalyst metal contains platinum. It is preferable that the platinum has a crystallite size of less than 4 nm or not more than 3.3 nm.

The oxidation onset temperature (the extrapolated onset temperature for an oxidation reaction on the basis of thermogravimetry (TG)) of the carbon support is not limited, but it is preferable, in terms of the durability (in particular, oxidation resistance), that the oxidation onset temperature be high. The oxidation onset temperature is preferably not lower than 610°C, more preferably not lower than 612°C, more preferably not lower than 615°C, more preferably not lower than 617°C, more preferably not lower than 620°C (or higher than 620°C), more preferably not lower than 622°C, and more preferably not lower than 625°C. The upper limit of the oxidation onset temperature of the carbon support is not limited, but may be, for example, 670°C, 660°C, 650°C, 640°C, or 630°C.

In the carbon support, the intensity ratio I(P1)/I(P2) between the peak P1 observed at 20 = 26° and the peak P2 observed at 20 = 26.5° is not less than 1.4, preferably not less than 1.5, more preferably not less than 1.7, more preferably not less than 2.0, more preferably not less than 2.2, and more preferably not less than 2.5. The upper limit of the intensity ratio I(P1)/I(P2) is not limited. The upper limit may be, for example, 10, 9.0, 8.0, 7.0, 6.0, 5.0, 4.0, 3.7, or 3.2.

The carbon support has a BET specific surface area (specific surface area evaluated by the BET method) of not less than 1000 m²/g, preferably not less than 1100 m²/g, more preferably not less than 1200 m²/g, more preferably not less than 1250 m²/g, and more preferably not less than 1300 m²/g. The upper limit of the BET specific surface area is not limited. The upper limit may be, for example, 2000 m²/g, 1800 m²/g, 1600 m²/g, 1500 m²/g, or 1400 m²/g. From the viewpoint of increasing the durability (in particular, oxidation resistance) of the carbon support, it is preferable that the upper limit of the BET specific surface area be not more than 1500 m²/g.

The carbon support described above has mesopores. It is preferable that the mesopores have an average pore diameter of 3.5 nm to 5.0 nm. The average pore diameter of the mesopores is more preferably 3.6 nm to 5.0 nm, more preferably 3.7 nm to 5.0 nm, more preferably 3.8 nm to 5.0 nm, more preferably 3.9 nm to 5.0 nm, and more preferably 4.0 nm to 5.0 nm. Further, the upper limit value "5.0 nm" of each of the above ranges of the average pore diameter of the mesopores may be, for example, 4.8 nm, 4.6 nm, 4.4 nm, 4.2 nm, or 4.0 nm.

The carbon support has mesopores, and it is preferable that the volume of the mesopores be not less than 0.73 mL per gram of the carbon support. The volume of the mesopores is more preferably not less than 0.80 mL per gram of the carbon support, more preferably not less than 0.90 mL per gram of the carbon support, more preferably not less than 0.95 mL per gram of the carbon support, and more preferably not less than 1.0 mL per gram of the carbon support. The upper limit of the volume of the mesopores is not limited. The upper limit may be, for example, 2.0 mL per gram of the carbon support, 1.8 mL per gram of the carbon support, 1.6 mL per gram of the carbon support, 1.4 mL per gram of the carbon support, 1.2 mL per gram of the carbon support, or 1.1 mL per gram of the carbon support.

The carbon support has micropores, and it is preferable that the volume of the micropores be not less than 0.37 mL per gram of the carbon support. The volume of the micropores is more preferably not less than 0.38 mL per gram of the carbon support, more preferably not less than 0.39 mL per gram of the carbon support, more preferably not less than 0.40 mL per gram of the carbon support, more preferably not less than 0.41 mL per gram of the carbon support, more preferably not less than 0.42 mL per gram of the carbon support, and more preferably not less than 0.43 mL per gram of the carbon support. The upper limit of the volume of the micropores is not limited. The upper limit may be, for example, 1.00 mL per gram of the carbon support, 0.90 mL per gram of the carbon support, 0.80 mL per gram of the carbon support, 0.70 mL per gram of the carbon support, 0.60 mL per gram of the carbon support, 0.54 mL per gram of the carbon support, or 0.50 mL per gram of the carbon support.

### [3. Method for producing carbon support for fuel cell catalyst and catalyst for fuel cell]

### [3-1. Method for producing carbon support for fuel cell catalyst]

A method for producing the carbon support according to an embodiment of the present invention may include the following steps (1) to (3): (1) a firing step of obtaining a fired body by firing an anhydride of magnesium citrate (e.g., trimagnesium dicitrate anhydride) which serves as not only a carbon source that becomes a component material of the carbonaceous wall but also a template source of the pores (e.g., mesopores and micropores); (2) a removal step of obtaining a carbon support precursor by removing the template (e.g., magnesium oxide) from the fired body; and (3) a heat treatment and grinding step of obtaining the carbon support, by (i) heating the carbon support precursor at a temperature increase rate of 5°C/min to 7°C/min to a final processing temperature of higher than 1600°C and not higher than 1800°C, (ii) keeping the carbon support precursor at the final processing temperature, (iii) cooling the carbon support precursor down to room temperature, and then, (iv) grinding the carbon support precursor with use of a grinder (e.g., dry bead mill). The following description will discuss the firing step, the removal step, and the heat treatment and grinding step.

### <Firing step>

The firing step is the step of obtaining a fired body by firing a trimagnesium dicitrate anhydride which serves as not only a carbon source that becomes a component material of the carbonaceous wall but also a template source of the pores (e.g., mesopores and micropores).

In the firing step described above, an anhydride of magnesium citrate (e.g., trimagnesium dicitrate anhydride) is used as a raw material. A constituent magnesium portion of the anhydride of magnesium citrate functions as the template source. Meanwhile, a constituent organic compound portion of the anhydride of magnesium citrate functions as the component material of the carbonaceous wall.

The firing step is preferably carried out in an inert atmosphere (e.g., in an argon atmosphere or a nitrogen atmosphere) and/or at a reduced pressure of not more than 133 Pa (1 Torr). Further, a firing temperature is preferably not lower than 500°C, more preferably 500°C to 1500°C, and more preferably 800°C to 1000°C. A firing time is preferably 0.5 hours to 3 hours, more preferably 1 hour to 3 hours, and more preferably 1 hour to 2 hours.

The above-described firing step may lead to formation of the mesopores and formation of the micropores at the positions that face the mesopores.

### <Removal step>

The removal step is the step of obtaining a carbon support precursor by removing the template (e.g., magnesium oxide) from the fired body, which has been obtained in the firing step.

The above-described removal step can be carried out by immersing the firing body in a removal solution, dissolving the template, and removing the template.

As the removal solution, it is possible to use an inorganic acid (e.g., hydrochloric acid, sulfuric acid, nitric acid, or acetic acid), and/or hot water. From the viewpoint of preventing a change in properties of the carbon support, it is preferable to use, as the removal solution, a dilute acid obtained by diluting the inorganic acid to a concentration of not more than 4 mol/L or hot water at a temperature of not lower than 80°C. Use of the inorganic acid advantageously accelerates a removal speed of the template.

### <Heat treatment and grinding step>

The heat treatment and grinding step is the step of obtaining the carbon support, by (i) heating the carbon support precursor, which has been obtained in the removal step, at a temperature increase rate of 5°C/min to 7°C/min to a final processing temperature of higher than 1600°C and not higher than 1800°C, (ii) keeping the carbon support precursor at the final processing temperature, (iii) cooling the carbon support precursor down to room temperature, and then, (iv) grinding the carbon support precursor with use of a grinder (e.g., dry bead mill).

In a case where the temperature increase rate is slow (e.g., below 5°C/min) in the heat treatment and grinding step, the total heat treatment time of the carbon support precursor becomes longer. As a result, the crystallinity of carbon in the carbon support thus obtained becomes too high. Meanwhile, in a case where the temperature increase rate is fast (e.g., more than 7°C/min) in the heat treatment and grinding step, the total heat treatment time of the carbon support precursor becomes shorter. As a result, the crystallinity of carbon in the carbon support thus obtained becomes too low. Adopting "a temperature increase rate of 5°C/min to 7°C/min" in the heat treatment and grinding step described above makes it possible to appropriately adjust the crystallinity of carbon. It is then possible to realize an "intensity ratio I(P1)/I(P2) between the peak P1 observed at 2θ = 26° and the peak P2 observed at 2θ = 26.5° of not less than 1.4".

Adopting "a final processing temperature of higher than 1600°C and not higher than 1800°C" in the heat treatment and grinding step leads to a higher oxidation onset temperature of the carbon support thus obtained. This makes it possible to enhance the durability (in particular, oxidation resistance) of the carbon support.

### [3-2. Method for producing catalyst for fuel cell]

A method for producing the catalyst for a fuel cell according to an embodiment of the present invention may include (4) a supporting step of obtaining the catalyst for a fuel cell by supporting the precursor of the catalyst metal on the carbon support and reducing the precursor. The supporting step will be described below.

### <Supporting step>

The supporting step is the step of obtaining the catalyst for a fuel cell by supporting the precursor of the catalyst metal on the carbon support and reducing the precursor. Note that the carbon support may be prepared by the method described above in [3-1. Method for producing carbon support for fuel cell catalyst].

The support step may be carried out, for example, by immersing the carbon support in a solution containing the precursor of the catalyst metal and a solvent, vaporizing and drying the solution from a resulting mixture, and subsequently carrying out a thermal reduction method.

Examples of the precursor of the catalyst metal include platinum-containing compounds such as platinum (II) chloride, platinum (IV) chloride, chloroplatinic acid (IV), diamminedinitritoplatinum (II), tetraammineplatinum (II) dichloride, hexahydroxoplatinic (IV) acid, pottasium tetrachloroplatinate (II), and pottasium tetrachloroplatinate (IV). It is possible to use one of the above platinum-containing compounds alone or two or more of the above platinum-containing compounds in combination.

The thermal reduction method mentioned above includes, for example, a method according to which the temperature is decreased down to room temperature after the heat treatment in an inert atmosphere (e.g., in the argon atmosphere or in the nitrogen atmosphere).

The solvent is not limited. However, from the viewpoint of preparing the catalyst for a fuel cell conveniently by a smaller number of steps, the solvent is preferably an aqueous solvent (for example, ultrapure water, or water containing not more than 10 vol% of alcohol). As the alcohol, methanol, ethanol, isopropanol, or the like is preferable.

Embodiments of the present invention may be configured as follows.
<1> A carbon support for a fuel cell catalyst, having: diffraction peaks of a (002) plane which are observed at least at 2θ = 22.5° to 25°, 26°, and 26.5° in an X-ray diffraction spectrum with CuKα rays; an intensity ratio I(P1)/I(P2) between a peak P1 observed at 2θ = 26° and a peak P2 observed at 20 = 26.5° of not less than 1.4; and a BET specific surface area of not less than 1000 m²/g.
<2> The carbon support according to <1>, having an oxidation onset temperature of not lower than 610°C.
<3> The carbon support according to <1> or <2>, wherein the intensity ratio I(P1)/I(P2) is not less than 1.7.
<4> The carbon support according to any one of <1> to <3>, wherein the BET specific surface area is not less than 1200 m²/g.
<5> The carbon support according to any one of <1> to <4>, having mesopores, the mesopores having an average pore diameter of 3.5 nm to 5.0 nm.
<6> The carbon support according to any one of <1> to <5>, having mesopores, the mesopores having a volume of not less than 0.73 mL per gram of the carbon support.
<7> The carbon support according to any one of <1> to <6>, having micropores, the micropores having a volume of not less than 0.37 mL per gram of the carbon support.
<8> A catalyst for a fuel cell, including a carbon support and a catalyst metal, the carbon support having diffraction peaks of a (002) plane which are observed at least at 2θ = 22.5° to 25°, 26°, and 26.5° in an X-ray diffraction spectrum with CuKα rays; an intensity ratio I(P1)/I(P2) between a peak P1 observed at 2θ = 26° and a peak P2 observed at 2θ = 26.5° of not less than 1.4; and a BET specific surface area of not less than 1000 m²/g.
<9> The catalyst according to <8>, wherein: the catalyst metal contains platinum; and the platinum has a crystallite size of less than 4 nm.
<10> The catalyst according to <9>, wherein the platinum has a crystallite size of not more than 3.3 nm.
<11> The catalyst according to any one of <8> to <10>, wherein the carbon support has an oxidation onset temperature of not lower than 610°C.
<12> The catalyst according to any one of <8> to <11>, wherein the intensity ratio I(P1)/I(P2) is not less than 1.7.
<13> The catalyst according to any one of <8> to <12>, wherein the BET specific surface area is not less than 1200 m²/g.
<14> The catalyst according to any one of <8> to <13>, wherein: the carbon support has mesopores; and the mesopores have an average pore diameter of 3.5 nm to 5.0 nm.
<15> The catalyst according to any one of <8> to <14>, wherein: the carbon support has mesopores; and the mesopores have a volume of not less than 0.73 mL per gram of the carbon support.
<16> The catalyst according to any one of <8> to <15>, wherein: the carbon support has micropores; and the micropores have a volume of not less than 0.37 mL per gram of the catalyst support.

### Examples

### <1. Preparation of carbon supports>

Trimagnesium dicitrate anhydride was heated to 900°C at a temperature increase rate of 5°C/min in a nitrogen atmosphere (at an oxygen concentration of not more than 100 ppm). Then, the temperature was kept at 900°C for 1 hour, so that a heat-treated product was obtained.

Thereafter, the heat-treated product was left to cool down to room temperature in the nitrogen atmosphere, and then collected.

In order to remove a magnesium component present in the heat-treated product, the heat-treated product was put in a 30 wt% sulfuric acid, and the magnesium component was eluted, as magnesium sulfate, into the 30 wt% sulfuric acid. Meanwhile, the heat-treated product left in the 30 wt% sulfuric acid was collected as an acid-treated product.

In order to remove a residue from the acid-treated product, the acid-treated product was washed with pure water. Thereafter, the acid-treated product was dried at 150°C in an air atmosphere until the moisture content became not more than 6 wt%. As a result, a dry matter was obtained.

In order to enhance the crystallinity of carbon, the dry matter was heated, at various temperature increase rates (2°C to 7°C, see Table 1), to various final heat treatment temperatures (1400°C to 2000°C/min, see Table 1). Then, the dry matter was kept at such a final heat treatment temperature for 1 hour. Thereafter, the dry matter was cooled down to room temperature, and then, grinding was carried out with use of a dry bead mill, so that the dry matter had a median diameter (D50) of 2 pm to 4 pm. As a result, 8 kinds of carbon supports (carbon supports of Examples 1 to 3, and carbon supports of Comparative Examples 1 to 5) were obtained.

The particle size (D50) of each of the carbon supports thus obtained was measured with use of a laser diffraction particle size analyzer LA-950, which was manufactured by Horiba, Ltd. In addition, the particle size (D50) was measured with use of water as a solvent and with use of polyethylene oxide (PEO) as a dispersing agent. Table 1 shows measurement results of the particle size (D50) of each of the carbon supports thus obtained.

**[Table 1]**

| | Temperature increase rate [°C/min] | Final heat treatment temperature [°C/min] | Particle size (D50) [µm] |
|---|---|---|---|
| Example 1 | 7 | 1800 | 2 |
| Example 2 | 6 | 1800 | 4 |
| Example 3 | 5 | 1800 | 2 |
| Comparative Example 1 | 5 | 1400 | 2 |
| Comparative Example 2 | 5 | 1600 | 2 |
| Comparative Example 3 | 3 | 1800 | 3 |
| Comparative Example 4 | 2 | 1800 | 2 |
| Comparative Example 5 | 5 | 2000 | 2 |

### <2. Preparation of carbon support supporting catalyst metal>

A catalyst metal (e.g., platinum) was supported on each of 8 kinds of the carbon supports which had been prepared in the above described <1. Preparation of carbon supports>, so that a catalyst metal-supporting carbon support (e.g., platinum-supporting carbon support) was prepared.

As a precursor of the platinum, a diamminedinitritoplatinum (II) nitrate solution was used.

For example, in a case where 0.3 g of the platinum-supported carbon support, on which 50 wt% of platinum was supported, was to be prepared, 1.491 mL of the diamminedinitritoplatinum (II) nitrate solution was prepared as a platinum source equivalent to 0.15 g. The diamminedinitritoplatinum (II) nitrate solution had a platinum concentration of 100.6 g/L.

Then, 0.15 g of the carbon support prepared in the above described <1. Preparation of carbon supports> was weighed and put in 100 mL of pure water. This pure water was stirred with use of a stirring device for not less than 30 minutes. After it is visually checked that the carbon support was dispersed in the pure water, 1.491 mL of the diamminedinitritoplatinum (II) nitrate solution was added to the mixture. Then, the mixture was further stirred for 1 hour, so that a diamminedinitritoplatinum (II) nitrate-treated material was obtained.

The processed material after stirring was transferred to a round-bottom flask. Then, an impregnation treatment was carried out on the processed material with use of a device (manufactured by BUCHI, Rotavaper R -100, Heating Bath B -100, Interface I -100, and VacuumPump V -100 in combination) which had a fractionation function and a vacuum-control function.

Specifically, the temperature in the round-bottom flask immersed in a water bath was kept at 30°C, and the round-bottom flask was rotated, so that the processed material in the round-bottom flask was stirred. In addition, the degree of vacuum in the round-bottom flask was set at 30 Pa, so that air present in pores of the carbon support was discharged and at the same time, a solution that contains platinum was caused to permeate the pores.

Moisture was gradually vaporized by keeping the degree of vacuum at 30 Pa. Two hours later, it was visually checked that water was substantially absent in the carbon support. Thereafter, the temperature of the water bath was changed to 80°C, and the degree of vacuum in the round-bottom flask was still kept at 30 Pa for 1 hour.

Subsequently, the processed material was removed from the round-bottom flask, and was stored in a drying machine at 60°C.

In order to cause heat reduction of the platinum, an alumina boat was filled with the processed material. At that time, the processed material was bedded in the alumina boat so as to be spread as much as possible.

The alumina boat filled with the processed material was placed in a tubular furnace, and was heated to 400°C under the following conditions: in an Ar flow (100 mL/min); and at a temperature increase rate of 1°C/min. Thereafter, the temperature was kept at 400°C for 3 hours. The processed material was thus subjected to a heat treatment.

While the Ar flow is being made, the processed material was left to cool down to room temperature, and 8 kinds of platinum-supporting carbon supports were collected.

### <3. Measurements of physical properties>

### <3-1. X-ray diffraction spectrum>

An X-ray diffraction spectrum of the carbon support was measured with use of each of the carbon supports prepared in <1. Preparation of carbon supports> described above.

As a measuring device of the X-ray diffraction spectrum, SmartLab manufactured by Rigaku was used. At the time of measurement, a scan rate was set to 8°/min, and a measurement range was set to a range of 2θ of 10° to 80°.

Igor Pro 6.36J was used to draw a diffraction curve in a range of 2θ of 20° to 30°, and Multi-peak Fitting 2 was used to separate a peak at approximately 26° from a peak at approximately 26.5°. The intensity ratio I(P1)/I(P2) between the peak P1 observed at 2θ = 26° and the peak P2 observed at 2θ = 26.5° was calculated on the basis of data of the above peaks after separation.

Functions used for peak fitting were as follows: "Logpoly5" for a baseline, and "Lorentzian" for peak 1 and ""Lorentzian" for peak 2.

It was confirmed by visual observation of measurement data that diffraction peaks of a (002) plane were observed at least at 2θ = 22.5° to 25°, 26°, and 26.5°, respectively.

Table 2 below shows measurement results. As shown in Table 2, in the case of the carbon support of each of Examples 1 to 3, the diffraction peaks of the (002) plane were observed at least at 2θ = 22.5° to 25°, 26° and 26.5° in the X-ray diffraction spectrum with CuKα rays.

Fig. 1 is a graph in which "Crystallite size of platinum [nm]" in Table 4 (described later) is plotted against "Peak intensity ratio (peak 1/peak 2)" for Examples 1 to 3 and Comparative Example 3. When such data was approximated to the function, "Y = -1.0592X + 5.4186, and R² = 0.6981" was obtained.

A catalyst metal having a small crystallite size has a large specific surface area of the catalyst metal. This allows for improvement of catalytic performance. Therefore, the crystallite size of the platinum is preferably not more than 4 nm, and more preferably not more than 3.3 nm. When "Y = 4 nm" was substituted in the function described above, "X ≈ 1.34" was obtained. This result clarified that, in a case where intensity ratio I(P1)/I(P2) between the peak P1 observed at 2θ = 26° and the peak P2 observed at 2θ = 26.5° was controlled to not less than 1.4, the crystallite size of the platinum could be controlled to a small size of not more than 4 nm. Further, when "Y = 3.3 nm" was substituted in the function described above, "X ≈ 2.00" was obtained. This result has clarified that, in a case where the intensity ratio I(P1)/I(P2) between the peak P1 observed at 2θ = 26° and the peak P2 observed at 2θ = 26.5° is controlled to be not less than 2.0, the crystallite size of the platinum can be controlled to a small size of not more than 3.3 nm.

**[Table 2]**

| | Number of peaks of XRD (002) | Angle of Peak 1 [°] | Height of Peak 1 [a.u.] | Angle of Peak 2 [°] | Height of Peak 2 [a.u.] | Peak intensity ratio (peak 1/peak 2) |
|---|---|---|---|---|---|---|
| Example 1 | 3 | 25.95 | 13329 | 26.5 | 3605 | 3.7 |
| Example 2 | 3 | 25.91 | 4059 | 26.41 | 1940 | 2.09 |
| Example 3 | 3 | 25.92 | 4116 | 26.41 | 2051 | 2.01 |
| Comparative Example 1 | 1 | - | - | - | - | - |
| Comparative Example 2 | 1 | - | - | - | - | - |
| Comparative Example 3 | 3 | 25.91 | 8857 | 26.46 | 15226 | 0.58 |
| Comparative Example 4 | 3 | 25.93 | 7679 | 26.45 | 13639 | 0.56 |
| Comparative Example 5 | 3 | 25.94 | 20253 | 26.47 | 36541 | 0.55 |

### <3-2. BET specific surface area; volume of all pores, volume of micropores, and volume of mesopores; and diameter of mesopores>

With use of the carbon supports prepared in the above <1. Preparation of carbon supports>, the BET specific surface area, volume of all pores, volume of micropores, and volume of mesopores, and diameter of the mesopores were measured.

The BET specific surface area, the volume of all the pores, the volume of the micropores, and the volume of the mesopores, and the diameter of the mesopores were measured in nitrogen gas adsorption measurement.

BELMAX manufactured by MicroTracBEL was used as a measuring device for the above measurements. At the time of measurement, an adsorption isotherm was drawn in a range where a relative pressure P/P0 was 0 to 0.95.

On the basis of the Brunauer-Emmett-Teller (BET) method, the BET specific surface area and the volume of all the pores were calculated. On the basis of the Barrett-Joyner-Halenda (BJH) method, the diameter of the mesopores was calculated. On the basis of the Dubinin-Astakhov (DA) method, the volume of the micropores was calculated. The value of the volume of the mesopores was obtained by subtracting the volume of the micropores from the volume of all the pores.

Table 3 below shows measurement results.

**[Table 3]**

| | BET specific surface area | Volume of all pores | Volume of micropores | Volume of mesopores | Diameter of mesopores |
|---|---|---|---|---|---|
| | [m²/g] | [mL/g] | [mL/g] | [mL/g] | [nm] |
| Example 1 | 1320 | 1.47 | 0.45 | 1.02 | 4 |
| Example 2 | 1280 | 1.43 | 0.44 | 0.99 | 4 |
| Example 3 | 1230 | 1.35 | 0.42 | 0.93 | 4 |
| Comparative Example 1 | 1580 | 1.60 | 0.56 | 1.04 | 3 |
| Comparative Example 2 | 1540 | 1.58 | 0.55 | 1.03 | 3 |
| Comparative Example 3 | 1240 | 1.42 | 0.42 | 1.00 | 4 |
| Comparative Example 4 | 1170 | 1.34 | 0.40 | 0.94 | 4 |
| Comparative Example 5 | 1070 | 1.30 | 0.36 | 0.94 | 4 |

### <3-3. Oxidation onset temperature based on thermogravimetry (TG)>

In a case where the oxidation onset temperature of the carbon support is high, it is possible to evaluate that the carbon support has high durability (in particular, oxidation resistance). In light of this, in order to confirm a reaction temperature between oxygen and the carbon support prepared in the above-described <1. Preparation of carbon supports>, thermogravimetry was carried out.

TG-DTA8122 manufactured by Rigaku was used as a thermogravimetric measuring device. After 4 mg of the carbon support had been measured, a dedicated pan made of Al₂O₃ was filled with the carbon support. Thereafter, the pan was placed on a scale of the thermogravimetric measuring device. The pan filled with the carbon support was heated to 900°C, under the following conditions: in an air flow (100 mL/min); and at a temperature increase rate of 5°C/min.

Temperature and weight data were extracted from data obtained by carrying out the thermogravimetry. Then, with use of a function derived from the data, the oxidation onset temperature was determined from an extrapolated onset temperature.

Table 4 below shows measurement results, in "TG oxidation onset temperature [°C]" and "Durability of carbon support". In addition, the "Durability of carbon support" was evaluated as follows: a case where the TG oxidation onset temperature was not lower than 610°C was evaluated as "Good"; a case where the TG oxidation onset temperature was not lower than 620°C was evaluated as "Excellent"; and a case where the TG oxidation onset temperature was lower than 610°C was evaluated as "Poor". As shown in Table 4, the carbon support of each of Examples 1 to 3 had a high TG oxidation onset temperature. Accordingly, it was clarified that the carbon support of each of Examples 1 to 3 had high durability (in particular, oxidation resistance).

It was also clarified that in a case where the final heat treatment temperature was low at the time when the carbon support was fabricated, the oxidation onset temperature became low.

It was also clarified that the oxidation onset temperature did not vary in accordance with the intensity ratio I(P1)/I(P2) between the peak P1 observed at 2θ = 26° and the peak P2 observed at 2θ = 26.5°.

### <3-4. Crystallite size of platinum supported on carbon support>

The crystallite size of the platinum supported on the carbon support was measured with use of the platinum-supporting carbon support prepared in the above described <2. Preparation of carbon support supporting catalyst metal>.

As a measuring device of the X-ray diffraction spectrum, SmartLab manufactured by Rigaku was used. At the time of measurement, the scan rate was set to 8°/min, and the measurement range was set to a range of 2θ of 10° to 80°.

The crystallite size was calculated on the basis of the Sheller equation (Dhkl = KX/(βcos θ), K = 0.9, λ = 1.5405 Å (CuKα)) with use of the peak of the (220) plane which was observed at approximately 2θ = 67°.

Table 4 below shows measurement results in "Crystallite size of platinum [nm]". As shown in Table 4, it was clarified that in the case of the carbon support of each of Examples 1 to 3 that supported platinum, the crystallite size of the platinum supported was small. The smaller the crystallite size of the platinum supported is, the wider the surface area of the platinum per unit mass becomes. This consequently improves catalytic performance.

It was also clarified that the crystallite size of the platinum supported varied in accordance with the intensity ratio I(P1)/I(P2) between the peak P1 observed at 2θ = 26° and the peak P2 observed at 2θ = 26.5°.

### <3-5. Electrochemical effective specific surface area (ECSA), and mass activity (MA) of platinum>

With use of the platinum-supporting carbon support prepared in the above-described <2. Preparation of carbon support supporting catalyst metal>, electrochemical effective specific surface area (ECSA, m²/g), and mass activity of platinum (MA, A/g) were measured.

In order to calculate the amount of platinum contained in the platinum-supporting carbon support, the platinum-supporting carbon support was subjected to thermogravimetry (TG) in an air atmosphere.

TG-DTA8122 manufactured by Rigaku was used as a the thermogravimetric measuring device. After 4 mg of the platinum-supporting carbon support had been measured, a dedicated pan made of Al₂O₃ was filled with the platinum-supporting carbon support. Thereafter, the pan was placed on a scale of the thermogravimetric measuring device. The pan filled with the platinum-supporting carbon support was heated to 600°C under the following conditions: in an air flow (100 mL/min); and at a temperature increase rate of 1°C/min.

A weight reduction rate on the basis of a difference between the weight of the platinum-supporting carbon support at 100°C and the weight of the platinum-supporting carbon support at 600°C was defined as an abundance of carbon in the platinum-supporting carbon support. Meanwhile, the value obtained by subtracting the abundance of carbon calculated above from the weight of the platinum-supporting carbon support at 100°C was defined as an abundance of platinum in the platinum-supporting carbon support. Respective proportions of carbon and platinum in the platinum-supporting carbon support were calculated on the basis of the abundance of carbon and the abundance of platinum which were described above.

As an electrochemical measuring device, an ALS model 700E manufactured by BAS, and a motor speed controller SC-5 and a rotating ring-disk electrode RRDE-1 manufactured by Nikko Keisoku were used.

As an electrode for measurement, an electrode made of Φ6 mm glassy carbon was used. An ink in which the platinum-supporting carbon support was dispersed was casted on the electrode, and the amount of platinum on the electrode was adjusted to 14.1 µg/cm².

The electrode on which the ink was casted was dried in vacuum for 1 hour. In order to immobilize the platinum-supporting carbon support on the electrode, 10 pL of an ionomer (0.02 volume% Nafion solution) was casted on the electrode. Thereafter, the electrode was left to dry.

As an electrolyte, 0.1 M HClO₄ was used.

The electrochemical effective specific surface area was calculated from data that had been obtained by cyclic voltammetry, with use of a hydrogen evolution potential as a reference, in a potential range of 0.05 V to 1.2 V under the condition in which a potential scanning rate was 50 mV/sec.

Specifically, the electrochemical effective specific surface area was calculated from an electric charge related to desorption of hydrogen observed at 0.05 V to 0.4 V. As for a calculation method, reference was made to "Electrochemistry, 79, No. 2 (2011), pp. 116 to 121".

Table 4 below shows measurement results in "ECSA [m²/g]". As shown in Table 4, it was clarified that the value of ECSA was large in the case of the platinum-supporting support prepared with use of the carbon support of each of Examples 1 to 3. The ECSA may be considered a surface area, per gram of a catalyst, which can substantially function as the catalyst. Therefore, a large value of the ECSA indicates that a surface area which can substantially function as the catalyst is large.

Meanwhile, the mass activity (MA) of the platinum was calculated from the following data: data which, while a rotating disk electrode was being rotated under the condition at 1600 rpm, had been obtained by linear sweep voltammetry in a range of 0.05 V to 1.2 V under the condition at a potential scan rate of 10 mV/sec.

Specifically, electric current values were read at 0.4 V and 0.9 V, and the mass activity of the platinum was calculated from the electric current values. As for a calculation method, reference was made to "Electrochemistry, 79, No. 2 (2011), pp. 116 to 121".

Table 4 below shows measurement results in "MA [A/g]". As shown in Table 4, it was clarified that the value of MA was large in the case of the platinum-supporting support prepared with use of the carbon support of each of Examples 1 to 3. The value of MA (in other words, the amount of oxygen reduced at the surface of the catalyst) varies in accordance with a crystal plane of the catalyst metal and/or with a crystal size of the catalyst metal. A large value of MA indicates that the crystal plane of the catalyst metal and the crystal size of the catalyst metal are favorably controlled.

"Overall evaluation of catalytic performance" in Table 4 is an overall evaluation of the catalytic performance of the carbon support that supports platinum, on the basis of the following three evaluations: "Crystallite size of platinum [nm]"; "ECSA [m²/g]; and "MA [A/g]" described above. Cases where all of the three evaluations were favorable were evaluated as "Good", whereas cases where two or less evaluations were favorable were evaluated as "Poor". As shown in Table 4, all of the three evaluations of the carbon support of each of Examples 1 to 3 supporting platinum were favorable.

**[Table 4]**

| | Durability | | Catalytic performance | | | |
|---|---|---|---|---|---|---|
| | TG oxidation onset temperature [°C] | Durability of carbon support | Crystallite size of platinum | ECSA | MA | Overall evalution of catalytic performance |
| | | | [nm] | [m²/g] | [A/g] | |
| Example 1 | 621 | Excellent | 2.2 | 95 | 500 | Good |
| Example 2 | 623 | Excellent | 2.7 | 97 | 500 | Good |
| Example 3 | 621 | Excellent | 2.3 | 87 | 460 | Good |
| Comparative Example 1 | 589 | Poor | - | - | - | - |
| Comparative Example 2 | 601 | Poor | - | - | - | - |
| Comparative Example 3 | 620 | Excellent | 5.6 | - | | Poor |
| Comparative Example 4 | - | - | - | - | - | Poor |
| Comparative Example 5 | 631 | Excellent | 5.0 | 80 | 350 | Poor |

### Industrial Applicability

An embodiment of the present invention is applicable to a catalyst for a fuel cell and to a fuel cell.

## Claims

1. A carbon support for a fuel cell catalyst, having:
diffraction peaks of a (002) plane which are observed at least at 2θ = 22.5° to 25°, 26°, and 26.5° in an X-ray diffraction spectrum with CuKα rays;
an intensity ratio I(P1)/I(P2) between a peak P1 observed at 2θ = 26° and a peak P2 observed at 2θ = 26.5° of not less than 1.4; and
a BET specific surface area of not less than 1000 m²/g.

2. The carbon support according to claim 1, having an oxidation onset temperature of not lower than 610°C.

3. The carbon support according to claim 1 or 2, wherein the intensity ratio I(P1)/I(P2) is not less than 1.7.

4. The carbon support according to claim 1 or 2, wherein the BET specific surface area is not less than 1200 m²/g.

5. The carbon support according to claim 1 or 2, having mesopores,
the mesopores having an average pore diameter of 3.5 nm to 5.0 nm.

6. The carbon support according to claim 1 or 2, having mesopores,
the mesopores having a volume of not less than 0.73 mL per gram of the carbon support.

7. The carbon support according to claim 1 or 2, having micropores,
the micropores having a volume of not less than 0.37 mL per gram of the carbon support.

8. A catalyst for a fuel cell, comprising a carbon support and a catalyst metal,
the carbon support having
diffraction peaks of a (002) plane which are observed at least at 2Θ = 22.5° to 25°, 26°, and 26.5° in an X-ray diffraction spectrum with CuKα rays;
an intensity ratio I(P1)/I(P2) between a peak P1 observed at 2Θ = 26° and a peak P2 observed at 2Θ = 26.5° of not less than 1.4; and
a BET specific surface area of not less than 1000 m²/g.

9. The catalyst according to claim 8, wherein:
the catalyst metal contains platinum; and
the platinum has a crystallite size of less than 4 nm.

10. The catalyst according to claim 9, wherein the platinum has a crystallite size of not more than 3.3 nm.

11. The catalyst according to claim 8 or 9, wherein the carbon support has an oxidation onset temperature of not lower than 610°C.

12. The catalyst according to claim 8 or 9, wherein the intensity ratio I(P1)/I(P2) is not less than 1.7.

13. The catalyst according to claim 8 or 9, wherein the BET specific surface area is not less than 1200 m²/g.

14. The catalyst according to claim 8 or 9, wherein:
the carbon support has mesopores; and
the mesopores have an average pore diameter of 3.5 nm to 5.0 nm.

15. The catalyst according to claim 8 or 9, wherein:
the carbon support has mesopores; and
the mesopores have a volume of not less than 0.73 mL per gram of the carbon support.

16. The catalyst according to claim 8 or 9, wherein:
the carbon support has micropores; and
the micropores have a volume of not less than 0.37 mL per gram of the catalyst support.
